# EUROPEAN PATENT SPECIFICATION

(11) **EP 0 887 355 B1**
(45) Date of publication and mention of the grant of the patent: **06.09.2006**
(21) Application number: 97949175.0
(22) Date of filing: 19.12.1997
(51) Int. Cl.: C08F 4/602, C08F 4/603, C08F 10/00

(54) **PROCESS FOR PREPARING OLEFIN POLYMERS**
VERFAHREN ZUR HERSTELLUNG VON OLEFINPOLYMEREN
PROCEDE POUR PREPARER DES POLYMERES D'OLEFINE

(30) Priority: 20.12.1996 JP 34198896; 14.01.1997 JP 503397; 14.01.1997 JP 503497; 04.07.1997 JP 17969397
(43) Date of publication of application: 30.12.1998
(73) Proprietor: Sumitomo Chemical Company, Limited, Tokyo 104-8260 (JP)
(72) Inventor: SATO, Hideki, Chiba 299-01 (JP); KATAYAMA, Hiroaki, Chiba 299-01 (JP)
(74) Representative: Vossius & Partner
(86) International application number: PCT/JP1997/004717
(87) International publication number: WO 1998/028341

(56) References cited:
- EP-A- 0 634 416
- WO-A-94/03506
- WO-A-94/07928
- WO-A-97/03992
- JP-A- 7 138 311
- JP-A- 8 245 712

## Description

The present invention relates to a method for producing an olefin polymer. More particularly, the present invention relates to a method for producing an olefin polymer using a transition metal compound represented by a metallocene complex, which does not require use of an aromatic hydrocarbon as a solvent.

In the present invention, the olefin polymer includes a homopolymer of an olefin and a copolymer of a plurality of olefins.

It has been reported that a catalyst for polymerization, comprising a transition metal compound, particularly a diimine complex or a transition metal complex containing one or two groups having a cyclopentadiene type anionic skeleton, e.g. a so-called non-metallocene complex or metallocene complex, respectively, and aluminoxane exhibits a high activity. Particularly, when the metallocene complex is used, an olefin polymer having narrow molecular weight distribution and composition distribution, that is, the resulting olefin polymer exhibits considerably useful feature from industrial point of view. Therefore, a lot of reports have recently been made (e.g. Japanese Patent Publication (Kokai) No. Sho 58-19309). It has also been reported that high activity is exhibited in the olefin polymerization in case of a system using no aluminoxane, that is, in a method using a specific boron compound (e.g. Japanese Patent Publication (Kohyo) No. Hei 1-502036, Japanese Patent Publication (Kokai) Nos. Hei 6-157651, Hei3-163088 and Hei3-188092).

Already known transition metal compounds such as ethylenebis(indenyl)zirconium dichloride, isopropylidene(cyclopentadienyl)(fluorenyl)zirconium dichloride, and dimethylsilyl (tert-butylamide)(tetramethylcyclopentadienyl)titanium dichloride, are soluble in an aromatic hydrocarbon solvent such as toluene, but hardly dissolve in an aliphatic hydrocarbon solvent. Therefore, the transition metal compound was normally handled in the form of a solution of the aromatic hydrocarbon solvent.

Furthermore, the above boron compound is a particulate solid and has a problem that it dissolves in the aromatic hydrocarbon solvent such as toluene to some extent but its solubility in the other solvent, particularly aliphatic hydrocarbon solvent, is very low. In general, in the polymerization of an olefin using a conventional transition metal compound, it is obliged to use the aromatic hydrocarbon solvent such as toluene. Such a solvent is liable to remain in a polymer as the product to give off an odor, resulting in a large problem.

An object of the present invention is to provide a method of producing an olefin polymer using a transition metal compound, which does not require use of an aromatic hydrocarbon solvent which is liable to remain in a polymer as the product to give off an odor.

That is, according to the present invention, there is provided a method for producing an olefin polymer, which comprises homopolymerizing or copolymerizing olefins in the presence of a catalyst for olefin polymerization, comprising the following (A) and (C) as catalyst components, or a catalyst for olefin polymerization, comprising the following (A), (B) and (C) as catalyst components:
(A): a transition metal complex dissolved, suspended or slurried in an aliphatic hydrocarbon compound;
(B): a compound dissolved, suspended or slurried in an aliphatic hydrocarbon compound, which is selected from the following (B1) to (B3):
   (B1) an organoaluminum compound represented by the general formula E¹ₐAlZ₃₋ₐ;
   (B2) a cyclic aluminoxane having a structure represented by the general formula {-Al(E²)-O-}_{b}; and
   (B3) a linear aluminoxane having a structure represented by the general formula E³{-Al(E³)-O-}_{c}AlE³₂ (wherein E¹ to E³ respectively represents a hydrocarbon group having 1 to 8 carbon atoms, and all of E¹, E² and E³ may be the same or different; Z represents a hydrogen atom or a halogen atom, and all of Z may be the same or different; a represents a numeral satisfying 0 < a ≦ 3; b represents an integer of not less than 2; and c represents an integer of not less than 1); and
(C): at least one boron compound suspended or slurried in an aliphatic hydrocarbon compound, which is selected from the following (C1) to (C3):
   (C1) a boron compound represented by the general formula BQ¹Q²Q³;
   (C2) a boron compound represented by the general formula G⁺(BQ¹Q²Q³Q⁴)⁻; and
   (C3) a boron compound represented by the general formula (L-H)⁺(BQ¹Q²Q³Q⁴)⁻
   (in each of the above general formulae, B is a boron atom in the trivalent valence state, Q¹ - Q⁴ are a halogen atom, a hydrocarbon group having 1 to 20 carbon atoms, a halogenated hydrocarbon group having 1 to 20 carbon atoms, a substituted silyl group having 1 to 20 carbon atoms, an alkoxy group having 1 to 20 carbon atoms or an amino group having 2 to 20 carbon atoms, which may be the same or different, respectively. G⁺ is an inorganic or organic cation, L is a neutral Lewis base, and (L-H)⁺ is a Brφnsted acid.), wherein the catalyst for olefin polymerization is a catalyst for olefins polymerization prepared by continuously feeding a part or all off the respective catalyst components in a device for preparing a catalyst, or a catalyst for olefin polymerization prepared by continuously feeding the respective catalyst components in a device for olefin polymerization, and wherein the aliphatic hydrocarbon compound in (C) is an aliphatic hydrocarbon compound having a viscosity of not less than 0.8 cP (0.8 mPa·s) at 20°C.

The present invention will be described in detail hereinafter.

All of the components (A) and component (C) or the additional component (B), which constitute the catalyst for olefin polymerization of the present invention, do not require an aromatic hydrocarbon compound as a solvent. As the solvent for dissolving, suspending or slurrying these catalyst components, an aliphatic hydrocarbon solvent is used.

### (A) Transition metal component

The component(A) of the catalyst for polymerizing an olefin used in the present invention is a dissolved, suspended or slurried transition metal component.

The transition metal compound is preferably a compound of Group III-XII or Group of lanthanide of the Periodic Table of the Elements (1993, IUPAC), and various transition metal compounds having an olefin polymerization activity (e.g. metallocene complex, non-metallocene complex can be employed. A transition metal compound of Group IV or lanthanide series is more preferred, and a transition metal compound having at least one cyclopentadiene type anionic skeleton, i.e. metallocene transition metal compound is most preferred.

The metallocene transition metal compound is a compound represented by the following general formula (3) :

(3) MLₐR³ₚ₋ₐ

(wherein M represents a transition metal compound of Group IV or lanthanide series of the Periodic Table of the Elements (1993, IUPAC); L represents a group having a cyclopentadiene type anionic skeleton or a group having a heteroatom, at least one of which is a group having a cyclopentadiene type anionic skeleton, and a plurality of L may be the same or different and may be crosslinked each other; R³ represents a halogen atom or a hydrocarbon group having 1 to 20 carbon atoms; a represents a numeral satisfying 0 < a ≦ p; and p represents a valence of a transition metal atom M).

In the general formula (3) representing the metallocene transition metal compound, M is a transition metal compound of Group IV or lanthanide series of the Periodic Table of the Elements (1993, IUPAC). Specific examples of the transition metal atom of Group IV include a titanium atom, a zirconium atom, a hafnium atom, and specific examples of the transition metal atom of lanthanide series include a samarium atom. Among them, titanium atom, zirconium atom or hafnium atom is preferred.

In the general formula (3) representing the metallocene transition metal compound, L is a group having a cyclopentadiene type anionic skeleton or a group having a heteroatom, at least one of which is a group having a cyclopentadiene type anionic skeleton, and a plurality of L may be the same or different and may be crosslinked each other.

Examples of the group having a cyclopentadiene type anionic skeleton include η⁵-cyclopentadienyl group, η⁵-substituted cyclopentadienyl group or a polycyclic group having a cyclopentadiene type anionic skeleton. Examples of the substituent of the η⁵-substituted cyclopentadienyl group include hydrocarbon group having 1 to 20 carbon atoms, halogenated hydrocarbon group having 1 to 20 carbon atoms or silyl group having 1 to 20 carbon atoms. Examples of the polycyclic group having a cyclopentadiene type anionic skeleton include η⁵-indenyl group, and η⁵-fluorenyl group. Examples of the heteroatom in the group having a heteroatom include nitrogen atom, phosphorous atom, oxygen atom, and sulfur atom. Examples of the group having such a heteroatom include hydrocarbylamino group, hydrocarbylphosphino group, hydrocarbyloxy group, and hydrocarbylthio group, preferably alkoxy group, aryloxy group, alkylthio group, arylthio group, dialkylamino group, diarylamino group, dialkylphosphino group and diarylphosphino group.

Specific examples of the η⁵-substituted cyclopentadienyl group include η⁵-methylcyclopentadienyl group,η⁵-ethylcyclopentadienyl group, η⁵-n-propylcyclopentadienyl group,η⁵⁻isopropylcyclopentadienyl group,η⁵-n-butylcyclopentadienyl group, η⁵-isobutylcyclopentadienyl group,η⁵-sec-butylcyclopentadienyl groups, η⁵-tert-butylcyclopentadienyl group, η⁵-1,2-dimethylcyclopentadienyl group,η⁵-1,3-dimethylcyclopentadienyl group,η⁵-1,2,3-trimethylcyclopentadienyl group,η⁵-1,2,4-trimethylcyclopentadienyl group,η⁵⁻tetramethylcyclopentadienyl group,η⁵⁻pentamethylcyclopentadienyl group, and η⁵⁻trimethylsilylcyclopentadienyl group.

Specific examples of the polycyclic group having a cyclopentadiene type anionic skeleton include η⁵-indenyl group, η⁵-2-methylindenyl group, *η*⁵ -4-methylindenyl group, η⁵-4, 5, 6, 7-tetrahydroindenyl group, and η⁵-fluorenyl group.

Specific examples of the group having a hetero atom include methoxy group, ethoxy group, propoxy group, butoxy group, phenoxy group, methylthio group, dimethylamino group, diethylamino group, dipropylamino group, dibutylamino group, diphenylamino group, pyrrolyl group, and dimethylphosphino group.

The groups having a cyclopentadiene type anionic skeleton, or the group having a cyclopentadiene type anionic skeleton and the group having a hetero atom may be crosslinked each other. In that case, an alkylene group (e.g. ethylene group, propylene group), a substituted alkylene group (e.g. dimethylmethylene group, diphenylmethylene group) or a substituted silylene group (e.g. silylene group, dimethylsilylene group, diphenylsilylene group, tetramethyldisilylene group) may exist between the groups.

R³ in the general formula (3) representing the metallocene transition metal compound is a halogen atom or a hydrocarbon group having 1 to 20 carbon atoms. a is a numeral satisfying 0 < a ≦ p, and p is a valence of a transition metal atom M. Specific examples of R³ include a fluorine atom, a chlorine atom, a bromine atom, iodine atom as the halogen atom and methyl group, ethyl group, n-propyl group, isopropyl group, n-butyl group, phenyl group, benzyl group as the hydrocarbon group having 1 to 20 carbon atoms. R³ is preferably a chlorine atom, methyl group or benzyl group.

Among metallocene transition metal compounds, specific examples of the compound wherein the transition metal atom M is a zirconium atom include
bis(cyclopentadienyl)zirconium dichloride,
bis(methylcyclopentadienyl)zirconium dichloride,
bis(pentamethylcyclopentadienyl)zirconium dichloride,
bis(indenyl)zirconium dichloride, bis(4,5,6,7-tetrahydroindenyl)zirconium dichloride,
bis(fluorenyl)zirconium dichloride,
ethylenebis(indenyl)zirconium dichloride,
ethylenebis(4,5,6,7-tetrahydroindenyl)zirconium dichloride,
isopropylidene(cyclopentadienyl)(fluorenyl)zirconium dichloride,
dimethylsilylenebis(cyclopentadienyl)zirconium
dichloride, dimethylsilylenebis(4,5,6,7-tetrahydroindenyl)zirconium dichloride,
dimethylsilylene(cyclopentadienyl)(fluorenyl)zirconium dichloride, diphenylsilylenebis(indenyl)zirconium dichloride, (cyclopentadienyl)(dimethylamide)zirconium dichloride, (cyclopentadienyl)(phenoxy)zirconium dichloride, dimethylsilyl(tert-butylamide)(tetramethylcyclopentadienyl)zirconium dichloride, bis(cyclopentadienyl)zirconium dimethyl,
bis(methylcyclopentadienyl)zirconium dimethyl,
bis(pentamethylcyclopentadienyl)zirconium dimethyl,
bis(indenyl)zirconium dimethyl, bis(4,5,6,7-tetrahydroindenyl)zirconium dimethyl,
bis(fluorenyl)zirconium dimethyl, ethylenebis(indenyl)zirconium dimethyl, and dimethylsilyl(tert-butylamide)(tetramethylcyclopentadienyl)zirconium dimethyl.

There can also be exemplified compounds wherein zirconium of the above zirconium compounds is replaced by titanium or hafnium.

These metallocene transition metal compounds may be used alone or in combination of two or more.

The component (A) of the catalyst for olefin polymerization used in the present invention is a transition metal compound dissolved, suspended or slurried in the aliphatic hydrocarbon compound, and a transition metal compound dissolved in the aliphatic hydrocarbon compound is preferably used.

Examples of the transition metal compound soluble in such an aliphatic hydrocarbon compound, include isopropylidene(cyclopentadienyl)(3-tert-butyl-5-methyl-2-phenoxy)titanium dichloride, and dimethylsilyl(tetramethylcyclopentadienyl)(3-tert-butyl-5-methyl-2-phenoxy)titanium dichloride.

### (B) Organometallic component

The component (B) used in the present invention is a compound dissolved, suspended or slurried in an aliphatic hydrocarbon compound, which is selected from (B1) an organoaluminum compound represented by the general formula E¹ₐAlZ₃₋ₐ, (B2) a cyclic aluminoxane having a structure represented by the general formula {-Al(E²)-O-}_{b} hand (B3) a linear aluminoxane having a structure represented by the general formula E³{-Al(E³)-O-}_{c}AlE³₂ (wherein E¹ to E³ respectively represents a hydrocarbon group having 1 to 8 carbon atoms, all of E¹, all of E² and all of E³ may be the same or different; Z represents a hydrogen atom or a halogen atom, and all of Z may be the same or different; a represents a numeral satisfying 0 < a ≦ 3; b represents an integer of not less than 2; and c represents an integer of not less than 1).

Specific examples of the organoaluminum compound (B1) represented by the general formula E¹ₐAlZ₃₋ₐ include trialkylaluminum such as trimethylaluminum, triethylaluminum, tripropylaluminum, triisobutylaluminum, trihexylaluminum; dialkylaluminum chloride such as dimethylaluminum chloride, diethylaluminum chloride, dipropylaluminum chloride, diisobutylaluminum chloride, dihexylaluminum chloride; alkylaluminum dichloride such as methylaluminum dichloride, ethylaluminum dichloride, propylaluminum dichloride, isobutylaluminum dichloride, hexylaluminum dichloride; and dialkylaluminum hydride such as dimethylaluminum hydride, diethylaluminum hydride, dipropylaluminum hydride, diisobutylaluminum hydride, dihexylaluminum hydride.

Among them, trialkylaluminum is preferred and triethylaluminum or triisobutylaluminum is more preferred.

Specific examples of E² and E³ in (B2) a cyclic aluminoxane having a structure represented by the general formula {-Al(E²)-O-}_{b} and (B3) a linear aluminoxane having a structure represented by the general formula E³⁻{Al(E³)-O-}_{c}AlE³₂ include alkyl group such as methyl group, ethyl group, n-propyl group, isopropyl group, n-butyl group, isobutyl group, n-pentyl group, and neopentyl group. b is an integer of not less than 2, c is an integer of not less than 1. Each of E² and E³ is preferably methyl group or isobutyl group. b is from 2 to 40 and c is from 1 to 40.

The above aluminoxane is prepared by various methods. The method is not specifically limited, and the aluminoxane may be prepared according to a known method. For example, the aluminoxane is prepared by contacting a solution, which is obtained by dissolving a trialkylaluminum (e.g. trimethylaluminum) in a suitable organic solvent (e.g. benzene, aliphatic hydrocarbon) with water. Also, there can be illustrated a method for preparing the aluminoxane by contacting a trialkylaluminum (e.g. trimethylaluminum) with a metal salt containing crystal water (e.g. copper sulfate hydrate).

### (C) Third component

As the component (C) in the present invention, there can be used one or more boron compounds selected from the following (C1) to (C3):
(C1) a boron compound represented by the general formula BQ¹Q²Q³;
(C2) a boron compound represented by the general formula G⁺(BQ¹Q²Q³Q⁴)⁻ ; and
(C3) a boron compound represented by the general formula (L-H)⁺(BQ¹Q²Q³Q⁴)⁻.

In the boron compound (C1) represented by the general formula BQ¹Q²Q³, B is a boron atom in the trivalent valence state; Q¹ to Q³ may be the same or different and represent a halogen atom, a hydrocarbon group having 1 to 20 carbon atoms, a halogenated hydrocarbon group having 1 to 20 carbon atoms, a substituted silyl group having 1 to 20 carbon atoms, an alkoxy group having 1 to 20 carbon atoms or an amino group having 2 to 20 carbon atoms. Q¹ to Q³ are preferably a halogen atom, a hydrocarbon group having 1 to 20 carbon atoms or a halogenated hydrocarbon group having 1 to 20 carbon atoms.

Specific examples of the compound (C1) include tris(pentafluorophenyl)borane, tris(2,3,5,6-tetrafluorophenyl)borane, tris(2,3,4,5-tetrafluorophenyl)borane, tris(3,4,5-trifluorophenyl)borane, tris(2,3,4-trifluorophenyl)borane, and phenylbis(pentafluorophenyl)borane, most preferably tris(pentafluorophenyl)borane.

In the boron compound (C2) represented by the general formula G⁺(BQ¹Q²Q³Q⁴)⁻, G⁺ represents an inorganic or organic cation; B is a boron atom in the trivalent valence state; and Q¹ to Q⁴ are as defined in Q¹ to Q³ in the above (1).

Specific examples of G⁺ as an inorganic cation in the compound represented by the general formula G⁺(BQ¹Q²Q³Q⁴)-include ferrocenium cation, alkyl-substituted ferrocenium cation, and silver cation. Examples of the G⁺ as an organic cation include triphenylmethyl cation. G⁺ is preferably a carbenium cation. Examples of (BQ¹Q²Q³Q⁴)⁻ include tetrakis(pentafluorophenyl)borate, tetrakis(2,3,5,6-tetrafluorophenyl)borate, tetrakis(2,3,4,5-tetrafluorophenyl)borate, tetrakis(3,4,5-trifluorophenyl)borate, tetrakis(2,3,4-trifluorophenyl)borate, phenyltris(pentafluorophenyl)borate, and tetrakis(3,5-bistrifluoromethylphenyl)borate.

Specific combination of these include ferroceniumtetrakis(pentafluorophenyl)borate, 1,1'-dimethylferroceniumtetrakis(pentafluorophenyl)borate, silvertetrakis(pentafluorophenyl)borate, triphenylmethyltetrakis(pentafluorophenyl)borate, and triphenylmethyltetrakis(3,5-bistrifluoromethylphenyl)borate, most preferably triphenylmethyltetrakis(pentafluorophenyl)borate.

In the boron compound (C3) represented by the formula (L-H)⁺(BQ¹Q²Q³Q⁴)⁻, L represents a neutral Lewis base; (L-H)⁺ represents a Brφnsted acid; B represents a boron atom in the trivalent valence state; and Q¹ to Q⁴ are as defined in Q¹ to Q³ in the above (C1).

Specific examples of (L-H)⁺ as a Brφnsted acid in the compound represented by the general formula (L-H)⁺(BQ¹Q²Q³Q⁴)⁻ include trialkyl-substituted ammonium, N,N-dialkylanilinium, dialkylammonium, and triarylphosphonium, and examples of (BQ¹Q²Q³Q⁴)⁻ include those as defined above.

Specific combination of them includes triethylammoniumtetrakis(pentafluorophenyl)borate, tripropylammoniumtetrakis(pentafluorophenyl)borate, tri(n-butyl)ammoniumtetrakis(pentafluorophenyl)borate, tri(n-butyl)ammoniumtetrakis(3,5-bistrifluoromethylphenyl)borate, N,N-dimethylanilinium tetrakis(pentafluorophenyl)borate, N,N-diethylanilinium tetrakis(pentafluorophenyl)borate, N,N-2,4,6-pentamethylaniliniumtetrakis(pentafluorophenyl)borate, N,N-dimethylaniliniumtetrakis(3,5-bistrifluoromethylphenyl)borate, diisopropylammonium tetrakis (pentafluorophenyl)borate, dicyclohexylammonium tetrakis (pentafluorophenyl)borate, triphenylphosphonium tetrakis(pentafluorophenyl)borate, tri(methylphenyl)phosphoniumtetrakis(pentafluorophenyl) borate, and tris(dimethylphenyl)phosphoniumtetrakis (pentafluorophenyl)borate, and tri(n-butyl) ammoniumtetrakis(pentafluorophenyl)borate or N,N-dimethylanilinumtetrakis(pentafluorophenyl)borate is most preferable.

As the component (C), (C2) or (C3) is preferred and triphenylmethyltetrakis(pentafluorophenyl)borate or N,N-dimethylaniliniumtetrakis(pentafluorophenyl)borate is particularly preferred. N,N-dimethylaniliniumtetrakis(pehtafluorophenyl)borate is most preferred.

### [Catalyst for olefin polymerization]

In the present invention, as the catalyst for olefin polymerization, a catalyst for olefin polymerization, obtainable by using the above (A) and (C) as the catalyst component, or a catalyst for olefin polymerization, obtainable by using the above (A), (B) and (C) as the catalyst component is used. A catalyst for olefin polymerization prepared by continuously feeding a part or all of the respective catalyst components in an apparatus for preparing a catalyst, or a catalyst for olefin polymerization prepared by continuously feeding the respective catalyst components in an apparatus for olefin polymerization is used. In case of feeding in the apparatus for preparing a catalyst or the apparatus for olefin polymerization, the respective catalyst components can be used by charging in an arbitrary order, but an arbitrary combination thereof may be used after previous contact.

In the present invention, the respective catalyst components are sometimes used in the state suspended or slurried in the aliphatic hydrocarbon compound. Herein, in the present invention, the state suspended or slurried in the solvent means the state in which a solid is not completely dissolved in the solvent but solid particles are dispersed in the solvent. In the present invention, the suspended state and slurried state are not particularly distinguished.

In the present invention, when the above respective catalyst components are fed in the state suspended or slurried in a solvent, the sedimentation velocity of each of the catalyst components in the suspended or slurried state is preferably lower than the flow velocity in a pipeline so that each of the catalyst components are not deposited in the pipeline.

In the present invention, the solvent used for dissolving, suspending or slurrying in the solvent is not specifically limited as far as it is an aliphatic hydrocarbon compound which causes no problem in use of the respective catalyst components. Specific examples thereof include butane, hexane, heptane, octane, cyclohexane, dodecane, and liquid paraffins.

In the present invention, it is preferable to use a solvent having a high viscosity so that the sedimentation velocity of the respective catalyst components in the suspended or slurried state is lower than the flow velocity in the pipeline. The viscosity of the solvent is preferably not less than 0.8 mPa·s (cP (centipoise)), more preferably 1.4 to 1200 mPa·s (cP), most preferably 1.6 to 50 mPa·s (cP).

Specific examples of solvents having a high viscosity include dodecane, various liquid paraffins, mixed solvents of these with other solvents. As the liquid paraffins, for example, commercially available liquid paraffins having various viscosities within 2 to 2000 mPa·s (cP) can be used. Besides, the viscosity referred to herein means the viscosity at 20°C.

Such a high-viscosity solvent is used as the solvent of the above component (C), furthermore, preferably used as the solvent of the above components (C) and (A).

In the present invention, when a pipeline is used in case of feeding the respective catalyst components to the apparatus for preparing a catalyst or apparatus for olefin polymerization, a diameter of the pipeline is not specifically limited, but is from 0.5 to 100 mm, preferably from 1 to 50 mm, more preferably from 1.5 to 30 mm.

The concentration of the respective catalyst components is appropriately selected according to the conditions such as performances of the apparatus for feeding the respective catalyst components to a polymerization reactor, and the respective catalyst components are preferably used so that the concentration of (A) is normally from 0.01 to 500 µmol/g, preferably from 0.05 to 100 µmol/g, more preferably from 0.05 to 50 µmol/g; the concentration of (B) is normally from 0.01 to 10000 µ mol/g, preferably from 0.1 to 5000 µmol/g, more preferably from 0.1 to 2000 µmol/g, in terms of Al atom; and the concentration of (C) is normally from 0.01 to 500 µmol/g, preferably from 0.05 to 200 µmol/g, more preferably from 0.05 to 100 µmol/g.

The above component (C) and majorities of the component (A) are soluble in an aromatic hydrocarbon solvent such as toluene to some extent, but hardly dissolve in an aliphatic hydrocarbon solvent. Although the amount of the above component (C) contained in the solution is small, particularly, the component (C) can be fed in a large amount and smaller volume by using a method of feeding the respective catalyst components in the suspended or slurried state in the solvent, favorably.

The above component (C) can be fed in the amount of 0.0001 to 800 mmol/liter, preferably 0.001 to 500 mmol/liter, in terms of the number of moles of the boron compound based on the volume of the solvent.

The respective catalyst components in the catalyst for olefin polymerization used in the present invention are preferably used so that a molar ratio of the component (B)/the component (A) is within the range from 0.1 to 10000, preferably from 5 to 2000, and a molar ratio of the component (C)/the component (A) is within the range from 0.01 to 100, preferably from 0.5 to 10.

As the olefin, which can be applied to the polymerization in the present invention, all of olefins having 2 to 20 carbon atoms can be used and two or more olefins can also be used, simultaneously. Specific examples of the olefin include straight-chain α-olefins such as ethylene, propylene, butene-1, pentene-1, hexene-1, heptene-1, octene-1, nonene-1, and decene-1; branched α -olefins such as 3-methylbutene-1, 3-methylpentene-1, 4-methylpentene-1, and 5-methyl-2-pentene-1; and vinylcyclohexane. Examples of the combination of olefins in the copolymerization include ethylene and propylene, ethylene and butene-1, ethylene and hexene-1, ethylene and octene-1, and propylene and butene-1.

The present invention can be effectively applied to the preparation of the copolymer of ethylene and α-olefin (e.g. propylene, butene-1, 4-methylpentene-1, hexene-1, octene-1), particularly.

Also, the polymerization method should not be specifically limited. For example, there can be performed solvent polymerization or slurry polymerization using an aliphatic hydrocarbon such as butane, pentane, hexane, heptane, octane, as the solvent, high-pressure ionic polymerization in the absence of a solvent under high temperature and high pressure, gas phase polymerization in a gaseous monomer. The polymerization can be performed in a continuous manner or a batch-wise manner.

More preferably, the preferable polymerization method in the present invention includes a high-temperature solution method of polymerizing an olefin under the conditions of 120 to 250°C and 490 to 4903 kPa (5 to 50 kg/cm²) where the polymer is molten, using a solvent such as cyclohexane and a high-pressure ionic polymerization method of polymerizing an olefin in a super critical fluid state under high temperature and high pressure in the absence of a solvent in the state where the produced polymer is molten.

More preferably, the polymerization is performed under a pressure of at least 29.4 MPa (300 kg/cm²), preferably 34 to 343 MPa (350 to 3500 kg/cm²) at a temperature of at least 130°C, preferably 135 to 350°C. In this case, as a polymerization form, both of a batch-wise manner and a continuous manner are possible, but it is preferable to perform in the continuous manner. As a reactor, a stirring type vessel reactor or a tubular reactor can be used. The polymerization can be performed in a single reaction zone. Alternatively, the polymerization can also be performed by partitioning one reactor into a plurality of reaction zones or connecting a plurality of reactors in series or parallel. In case of using a plurality of reactors, both of a combination of a vessel reactor and another vessel reactor and a combination of a vessel reactor and a tubular reactor are used. In a method of polymerizing using a plurality of reaction zones or a plurality of reactors, polymers having different characteristics can also be produced by changing the temperature, pressure and gas composition of each reaction zone.

The respective catalyst components are normally fed to the reactor with a high-pressure pump. In such a polymerization under high pressure, for introducing the catalyst into the high-pressure portion with a pump, the catalyst is preferably in liquid-form, is homogeneously dissolved in a solvent, or is a particle small in a particle diameter and good in dispersity when it is solid insoluble in a solvent. In that case, the maximum particle diameter is preferably 50 *µ*m or less, more preferably 30 *µ*m or less, particularly 10 *µ*m or less, most preferably 5 *µ*m or less. For example, a maximum particle diameter of the boron compound in (C) is not more than 50 *µ*m.

In order to control the particle diameter of the boron compound (C), there can be applied a pulverization method and a method of adding dropwise a solution obtained by dissolving it in toluene to an aliphatic hydrocarbon solvent such as heptane for precipitating.

A catalyst solution is normally handled under an inert gas atmosphere such as nitrogen, or argon so that it is not brought into contact with water and air.

The polymerization time is appropriately determined according to the kind of the desired polymer and reactor, and the conditions are not specifically limited. In the present invention, a chain transfer agent such as hydrogen, can also be added to control the molecular weight of the copolymer.

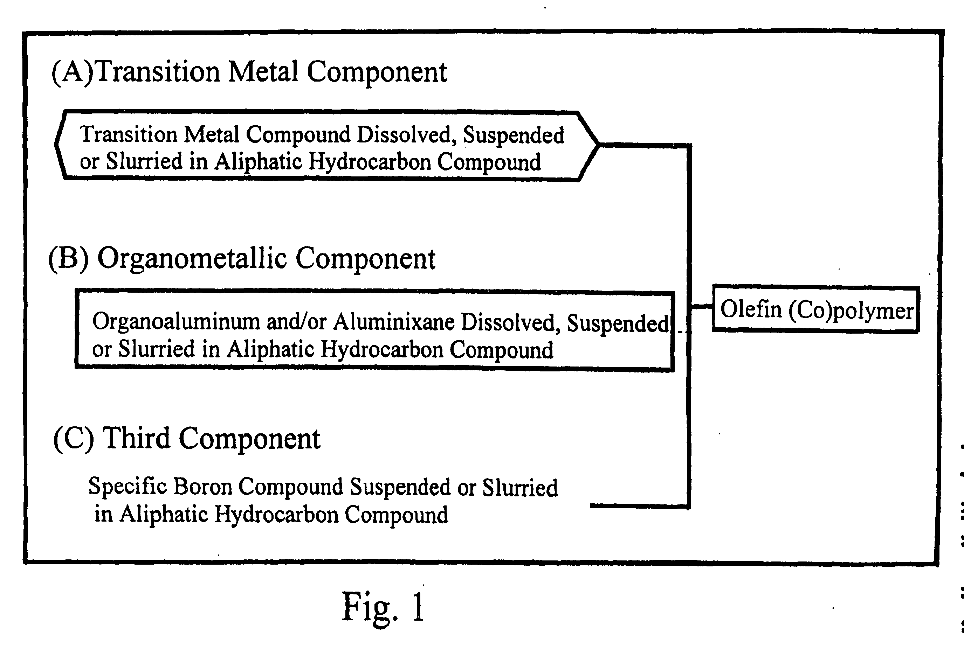

Fig. 1 is a flow chart for assisting the understanding of the present invention. This flow chart is a typical example of an embodiment of the present invention, and the present invention is not limited thereto.

The following Examples and Comparative Examples further illustrate the present invention in detail but are not to be construed to limit the scope thereof.

Properties of the polymers in the Examples were measured by the following methods.
(1) Melt index (MFR) was measured at 190°C according to the method defined in JIS K-6760.
(2) The density was determined according to JIS K-6760. Provided that the value of the density described as the density (without annealing) is a value measured without subjecting to annealing, whereas the value of the density described as the density (with annealing) is a value measured after annealing.
(3) Melting point of copolymer: It was measured under the following conditions by using DSC7 manufactured by Perkin-Elmer Co.
   Heating: heating to 150°C and maintaining at the same temperature until calorie is stabilized
   Cooling: cooling from 150 to 40°C (5°C/min.) and maintaining for 2 minutes
   Measurement: from 10 to 150°C (5°C/min.)
(4) Content of α-olefin: It was determined from characteristic absorption of ethylene and α-olefin by using an infrared spectrometer (FT-IR7300, manufactured by NIPPON BUNKO Inc.) and was shown as the short-chain branch (SCB) number per 1000 carbon atoms.
(5) Molecular weight and molecular weight distribution:
   They were determined under the following conditions by using a gel permeation chromatograph (150, C, manufactured by Waters Co.).
   Column: TSK gel GMH-HT
   Measuring temperature: set at 145°C
   Measuring concentration: 10 mg/10 ml orthodichlorobenzene

### Reference Example (Synthesis of transition metal compound: dimethylsilyl(tetramethylcyclopentadienyl)(3-tert-butyl-5-methyl-2-phenoxy)titanium dichloride

### (1) Synthesis of 1-bromo-3-tert-butyl-5-methyl-2-phenol

Under a nitrogen atmosphere, 20.1 g (123 mmol) of 2-tert-butyl-4-methylphenol was dissolved in 150 ml of toluene in a 500 ml four-necked flask equipped with a stirrer, and 25.9 ml (18.0 g, 246 mmol) of tert-butylamine was then added. This solution was cooled to -70°C and 10.5 ml (32.6 g, 204 mmol) of bromine was added to the solution. The mixture was stirred for 2 hours at -70°C. Thereafter, the mixture was heated to room temperature and washed three times by adding 100 ml of 10% diluted hydrochloric acid every washing. After washing, the resulting organic layer was dried by using anhydrous sodium sulfate and the solvent was removed by using an evaporator. Then, the organic layer was purified by using a silica gel column to obtain 18.4 g (75.7 mmol) of 1-bromo-3-tert-butyl-5-methyl-2-phenol as a colorless oil. The yield was 62%.

### (2) Synthesis of 1-bromo-3-tert-butyl-2-methoxy-5-methylbenzene

Under a nitrogen atmosphere, 13.9 g (57.2 mmol) of 1-bromo-3-tert-butyl-5-methyl-2-phenol synthesized in the above (1) was dissolved in 40 ml of acetonitrile in a 100 ml four-necked flask equipped with a stirrer, and 3.8 g (67.9 mmol) of potassium hydroxide was then added. Furthermore, 17.8 ml (40.6 g, 286 mmol) of methyl iodide was added, followed by continuous stirring for 12 hours. Then, the solvent was removed by using an evaporator and 40 ml of hexane was added to the residue, thereby to extract the hexane soluble matter. The extraction was repeated three times. The solvent was removed from the extract to obtain 13.8 g (53.7 mmol) of 1-bromo-3-tert-butyl-2-methoxy-5-methylbenzene as a pale yellow oil. The yield was 94%.

### (3) Synthesis of (3-tert-butyl-2-methoxy-5-methylphenyl)chlorodimethylsilane

To a solution of tetrahydrofuran (31.5 ml), hexane (139 ml) and 1-bromo-3-tert-butyl-2-methoxy-5-methylbenzene (45 g) synthesized in the above (2), a hexane solution (115 ml) of n-butyllithium (1.6 mol/liter) was added dropwise at -40°C over 20 minutes. After the resulting mixture was maintained at -40°C for 1 hour, tetrahydrofuran (31.5 ml) was added dropwise.

To a solution of dichlorodimethylsilane (131 g) and hexane (306 ml), the mixture obtained above was added dropwise at -40°C. The resulting mixture was heated to room temperature over 2 hours, followed by stirring at room temperature for 12 hours.

The solvent and excess dichlorodimethylsilane were distilled off from the reaction mixture under reduced pressure, and the hexane soluble matter was extracted with hexane from the residue. Then, the solvent was distilled off from the resulting hexane solution to obtain 41.9 g of (3-tert-butyl-2-methoxy-5-methylphenyl) chlorodimethylsilane as a pale yellow oil. The yield was 84%.

### (4) Synthesis of (3-tert-butyl-2-methoxy-5-methylphenyl)dimethyl(tetramethylcyclopentadienyl)silane

To a solution of (3-tert-butyl-2-methoxy-5-methylphenyl)chlorodimethylsilane (5.24 g) synthesized in the above (3) and tetrahydrofuran (50 ml), tetramethylcyclopentadienyl lithium (2.73 g) was added at -35°C and the mixture was heated to room temperature over 2 hours, followed by stirring at room temperature for 10 hours.

The solvent was distilled off from the resulting reaction mixture under reduced pressure, and the hexane soluble matter was extracted with hexane from the residue. Then, the solvent was distilled off from the resulting hexane solution under reduced pressure to obtain 6.69 g of (3-tert-butyl-2-methoxy-5-methylphenyl)dimethyl (tetramethylcyclopentadienyl)silane as an yellow oil. The yield was 97%.

### (5) Synthesis of dimethylsilyl (tetramethylcyclopentadienyl)(3-tert-butyl-2-phenoxy)titanium dichloride

To a solution of (3-tert-butyl-2-methoxy-5-methylphenyl)dimethyl(tetramethylcyclopentadienyl)silane (10.04 g) synthesized in the above (4), toluene (100 ml) and triethylamine (6.30 g), a hexane solution (19.0 ml) of n-butyllithium (1.63 mol/liter) was added dropwise at -70°C. Then, the mixture was heated to room temperature over 2 hours and maintained at room temperature for 12 hours.

Under a nitrogen atmosphere, the mixture obtained above was added dropwise to a toluene solution (50 ml) of titanium tetrachloride (4.82 g). The resulting mixture was heated to room temperature over 1 hour and heated under reflux for 10 hours.

The reaction mixture was filtered and the solvent was distilled off from the filtrate. The residue was recrystallized from a toluene-hexane mixed solvent to obtain 3.46 g of dimethylsilyl(tetramethylcyclopentadienyl)(3-tert-butyl-5-methyl-2-phenoxy)titanium dichloride as an orange prismatic crystal. The yield was 27%.

The spectrum data were as follows.
¹H-NMR (CDCl₃) δ 0.57 (s, 6H), 1.41 (s, 9H), 2.15 (s, 6H), 2.34 (s, 6H), 2.38 (s, 3H), 7.15 (s, 1H), 7.18 (s, 1H)
¹³C-NMR (CDCl₃) δ 1.25, 14.48, 16.28, 22.47, 31.25, 36.29, 120.23, 130.62, 131.47, 133.86, 135.50, 137.37, 140.82, 142.28, 167.74
Mass spectrum (CI, m/e)458

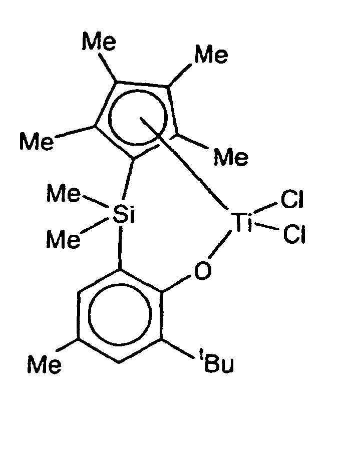

### Example 1

Using an autoclave type reactor having an internal volume of 1 liter, equipped with a stirring blade, ethylene and butene-1 were continuously fed in the reactor and polymerization was carried out. The polymerization conditions were set to the total pressure of 78.4 MPa (800 kg/cm²G), the concentration of butene-1 of 29% by mol and the concentration of hydrogen of 0.12% by mol. A hexane solution (0.7 µmol/g) of dimethylsilyl (tetramethylcyclopentadienyl)(3-tert-butyl-5-methyl-2-phenoxy)titanium dichloride, a heptane solution (35 µ mol/g) of triisobutylaluminum and N,N-dimethylaniliniumtetrakis(pentafluorophenyl)borate (obtained by atomizing according to a re-precipitation method using toluene and heptane, the particle size is from 2 to 3 µm and particles having the particle size of not less than 10 µm are not observed, 1.2 µmol/g) dispersed in a mixed solution (a volume ratio of heptane: liquid paraffin = 1:4) of heptane and liquid paraffin (Crystol 202, manufactured by Esso Sekiyu K.K., viscosity at 18°C = 130 mPa·s (cP) were prepared in separate vessels, and the respective ones were continuously fed in the reactor through a pipeline having a diameter of 3.175 mm at a feeding rate of 300 g/hour, 360 g/hour and 750 g/hour, respectively. The polymerization temperature was set to 230°C, a molar ratio of Al atom to Ti atom was set to 60, and a molar ratio of boron atom to Ti atom was set to 4.4. As a result, an ethylene-butene-1 copolymer having a melting point of 90.6°C, a molecular weight (Mw) of 64000 and a molecular weight distribution (Mw/Mn) of 1.7 was produced in a rate of 10 tonsper one hour per mol of Ti atom.

### Example 2

Using an autoclave type reactor having an internal volume of 1 liter, equipped with a stirring blade, ethylene and butene-1 were continuously fed in the reactor and polymerization was carried out. The polymerization conditions were set to the total pressure of 78.4 MPa (800 kg/cm²G) and the concentration of butene-1 of 45.9% by mol. Dimethylsilyl(tetramethylcyclopentadienyl)(3-tert-butyl-5-methyl-2-phenoxy)titanium dichloride was dissolved (0.066 µmol/g) in a mixed solution (a volume ratio of heptane: liquid paraffin = 1:4) of heptane and liquid paraffin (Crystol 202, manufactured by Esso Sekiyu K.K.) and N,N-dimethylaniliniumtetrakis (pentafluorophenyl)borate (obtained by atomizing according to a re-precipitation method using toluene and heptane, the particle size is from 2 to 3 µm and particles having the particle size of not less than 10 µm are not observed) was dispersed (0.4 µmol/g) in the solution. Furthermore, the resulting suspension was adjusted so that a molar ratio of boron atom to Ti atom becomes 6.0. This mixed suspension and a heptane solution (5.47 µmol/g) of triisobutylaluminum were prepared in separate vessels, and the respective solutions were continuously fed in the reactor through a pipeline having a diameter of 3.175 mm at a feeding rate of 323 g/hour and 240 g/hour, respectively. The polymerization reaction temperature was set to 205°C and a molar ratio of Al atom to Ti atom was set to 61.7. As a result, an ethylene-butene-1 copolymer having a density (without annealing) of 0.873 g/cm³, MFR of 6.8 g/10 min., a molecular weight (Mw) of 72000 and a molecular weight distribution (Mw/Mn) of 1.7 was produced in a rate of 98.4 tons per one hour per mol of Ti atom.

### Example 3

Using an autoclave type reactor having an internal volume of 1 liter, equipped with a stirring blade, ethylene and butene-1 were continuously fed in the reactor and polymerization was carried out. The polymerization conditions were set to a total pressure of 78.4 MPa (800 kg/cm²G) and a concentration of butene-1 of 47.0% by mol. Dimethylsilyl(tetramethylcyclopentadienyl)(3-tert-butyl-5-methyl-2-phenoxy)titanium dichloride was dissolved (0.066 µmol/g) in a mixed solution (a volume ratio of heptane: liquid paraffin = 1:4) of heptane and liquid paraffin (Crystol 202, manufactured by Esso Sekiyu K.K.) and N,N-dimethylaniliniumtetrakis (pentafluorophenyl)borate (obtained by atomizing according to a re-precipitation method using toluene and heptane, the particle size is from 2 to 3 µm and particles having the particle size of not less than 10 µm are not observed) was dispersed (0.4 µmol/g) in the solution. Furthermore, the resulting suspension was adjusted so that a molar ratio of boron atom to Ti atom becomes 6.0. This mixed suspension and a heptane solution (5.47 µmol/g) of triisobutylaluminum were prepared in separate vessels, and the respective ones were continuously fed in the reactor through a pipeline having a diameter of 3.175 mm at a feeding rate of 373 g/hour and 283 g/hour, respectively. The polymerization reaction temperature was set to 206°C and a molar ratio of Al atom to Ti atom was set to 63.3. As a result, an ethylene-butene-1 copolymer having a density (without annealing) of 0.867 g/cm³, a melting point of 42.6°C and a MFR of 11.8 g/10 min. was produced in a rate of 106.3 tons per one hour per mol of Ti atom.

### Example 4

Using an autoclave type reactor having an internal volume of 1 liter, equipped with a stirring blade, ethylene and butene-1 were continuously fed in a reactor and polymerization was performed. The polymerization conditions were set to a total pressure of 78.4 mPa (800 kg/cm²G) and a concentration of butene-1 of 43.9% by mol. Dimethylsilyl(tetramethylcyclopentadienyl)(3-tert-butyl-5-methyl-2-phenoxy)titanium dichloride was dissolved (0.066 µmol/g) in a mixed solution (a volume ratio of heptane: liquid paraffin = 1:4) of heptane and liquid paraffin (Crystol 202, manufactured by Esso Sekiyu K.K.) and N,N-dimethylaniliniumtetrakis (pentafluorophenyl)borate (obtained by atomizing according to a re-precipitation method using toluene and heptane, the particle size is from 2 to 3 µm and particles having the particle size of not less than 10 µm are not observed) was dispersed (0.4 µmol/g) in the solution. Furthermore, the resulting suspension was adjusted so that a molar ratio of boron atom to Ti atom becomes 6.0. This mixed suspension and a heptane solution (5.47 µmol/g) of triisobutylaluminum were prepared in separate vessels, and the respective ones were continuously fed in the reactor through a pipeline having a diameter of 3.175 mm at a feeding rate of 290 g/hour and 270 g/hour, respectively. The polymerization reaction temperature was set to 205°C and a molar ratio of boron atom to Ti atom was set to 77.2. As a result, an ethylene-butene-1 copolymer having a MFR of 13.3 g/10 min. was produced in a rate of 104.5 tons per one hour per mol of Ti atom.

### Example 5

Using an autoclave type reactor having an internal volume of 1 liter, equipped with a stirring blade, ethylene and hexene-1 were continuously fed in a reactor and polymerization was performed. The polymerization conditions were set to a total pressure of 78.1 MPa (796 kg/cm²G) and a concentration of hexene-1 of 29.7% by mol. A heptane solution obtained by mixing dimethylsilyl (tetramethylcyclopentadienyl)(3-tert-butyl-5-methyl-2-phenoxy)titanium dichloride and triisobutylaluminum (the concentrations of the complex and triisobutylaluminum are 0.37 µmol/g and 18.5 µmol/g, respectively, and a molar ratio of Al atom to Ti atom is 50) and a suspension (0.71 µmol/g) of triphenylmethyltetrakis (pentafluorophenyl)borate (a maximum particle diameter of 20 µm or less) atomized by wet pulverization, suspended in a mixture (a volume ratio of heptane: liquid paraffin = 1:4) of heptane and liquid paraffin (Crystol 202, manufactured by Esso Sekiyu K.K.), were prepared in separate vessels, and the respective solutions were continuously fed in the reactor through a pipeline having a diameter of 3.175 mm at a feeding rate of 246 g/hour and 484 g/hour, respectively. The polymerization temperature was set to 210°C and a molar ratio of boron atom to Ti atom was set to 3.6. As a result, an ethylene-hexene-1 copolymer having a MFR of 3.8 g/10 min. and a density (without annealing) of 0.889 g/cm³ was produced in a rate of 28 tons per one hour per mol of Ti atom.

### Examples 6

Using an autoclave type reactor having an internal volume of 1 liter, equipped with a stirring blade, ethylene- and hexene-1 were continuously fed in a reactor and polymerization was carried out. The polymerization conditions were set to a total pressure was set to 78.1 MPa (796 kg/cm²G) and a concentration of hexene-1 of 31.6% by mol. A heptane solution obtained by mixing dimethylsilyl(tetramethylcyclopentadienyl)(3-tert-butyl-5-methyl-2-phenoxy)titanium dichloride and triisobutylaluminum (the concentrations of the complex and triisobutylaluminum are 2 µmol/g and 200 µmol/g, respectively, and a molar ratio of Al atom to Ti atom is 100) and a liquid paraffin (a mixture of Crystol 202(130 mPa·s (cP) at 18°C) manufactured by Esso Sekiyu K.K.:IP Solvent 2028(3.2 mPa·s (cP) at 19°C) manufactured by Idemitsu Petrochemical Co., Ltd. = 60:40 (% by volume)) suspension (7.0 µmol/g) of N,N-dimethylaniliniumtetrakis(pentafluorophenyl)borate atomized by wet pulverization (maximum particle diameter: not more than 20 µm) were prepared in separate vessels, and the respective ones were continuously fed in the reactor through a pipeline having a diameter of 3.175 mm at a feeding rate of 90 g/hour and 195 g/hour, respectively. The polymerization temperature was set to 220°C and the molar ratio of boron atom to Ti atom was set to 7.6. As a result, an ethylene-hexene-1 copolymer having a MFR of 5.8 g/10 min., a density (without annealing) of 0.888 g/cm³, a melting point of 69.8°C and SCB of 32.6 was produced in a rate of 11 tons per one hour per mol of Ti atom.

### Example 7

Using an autoclave type reactor having an internal volume of 1 liter, equipped with a stirring blade, ethylene and hexene-1 were continuously fed in a reactor and polymerization was carried out. The polymerization conditions were set to a total pressure of 78.1 MPa (796 kg/cm²G) and a concentration of hexene-1 of 31.1% by mol. A heptane solution obtained by mixing dimethylsilyl(tetramethylcyclopentadienyl)(3-tert-butyl-5-methyl-2-phenoxy)titanium dichloride and triisobutylaluminum (the concentration of the complex and that of triisobutylaluminum are 0.37 µmol/g and 18.5 µ mol/g, respectively, and the molar ratio of Al atom to Ti atom is 50) and a liquid paraffin (a mixture of Crystol 202 manufactured by Esso Sekiyu K.K.:IP Solvent 2028 manufactured by Idemitsu Petrochemical Co., Ltd. = 60:40 (% by volume)) suspension (1.39 µ mol/g) of N,N-dimethylaniliniumtetrakis(pentafluorophenyl)borate atomized by wet grinding (maximum particle diameter: not more than 20 µm) in a mixed solution were prepared in separate vessels, and the respective ones were continuously fed in the reactor through a pipeline having a diameter of 3.175 mm at a feeding rate of 745 g/hour and 1235 g/hour, respectively. The polymerization temperature was set to 247°C and the molar ratio of boron atom to Ti atom was set to 6.22. As a result, an ethylene-hexene-1 copolymer having a MFR of 55 g/10 min. and a density (without annealing) of 0.886 g/cm³ was produced in a rate of 13 tons per one hour per mol of Ti atom.

As described above, according to the present invention, there can be provided, in a method of producing an olefin polymer using a transition metal compound, a method not requiring use of an aromatic hydrocarbon solvent which is liable to remain in a polymer as the product and to give off an odor.

## Claims

1. A method for producing an olefin polymer **characterized by** homopolymerizing an olefin or copolymerizing two or more olefins in the presence of a catalyst for olefin polymerization, comprising the following (A) and (C) as catalyst components, or a catalyst for olefin polymerization, comprising the following (A), (B) and (C) as catalyst components:
(A) a transition metal compound dissolved, suspended or slurried in an aliphatic hydrocarbon compound;
(B) a compound dissolved, suspended or slurried in an aliphatic hydrocarbon compound, which is selected from the following (B1) to (B3):
(B1) an organoaluminum compound represented by the general formula E¹ₐAlZ₃₋ₐ ;
(B2) a cyclic aluminoxane having a structure represented by the general formula {-Al(E²)-O-}_{b}; and
(B3) a linear aluminoxane having a structure represented by the general formula E³{-Al(E³)-O-}_{c}AlE³₂
wherein E¹ to E³ respectively represents a hydrocarbon group having 1 to 8 carbon atoms, and all of E¹, E² and E³ may be the same or different; Z represents a hydrogen atom or a halogen atom, and all of Z may be the same or different; a represents a numeral satisfying 0 < a ≦ 3; b represents an integer of not less than 2; and c represents an integer of not less than 1F, and
(C) at least one boron compound suspended or slurried in an aliphatic hydrocarbon compound, which is selected from the following(Cl) to (C3):
(C1) a boron compound represented by the general formula BQ¹Q²Q³;
(C2) a boron compound represented by the general formula G⁺(BQ¹Q²Q³Q⁴)⁻; and
(C3) a boron compound represented by the general formule (L-H)⁺(BQ¹Q²Q³Q⁴)⁻
wherein B represents a boron atom in the trivalent valence state; Q¹ to Q⁴ may be the same or different and represent a halogen atom, a hydrocarbon group having 1 to 20 carbon atoms, a halogenated hydrocarbon group having 1 to 20 carbon atoms, a substituted silyl group having 1 to 20 carbon atoms, an alkoxy group having 1 to 20 carbon atoms or an amino group having 2 to 20 carbon atoms; G⁺ represents an inorganic or organic cation; L represents a neutral Lewis base; and (L-H)⁺ represents a Brφnsted acid,
wherein the catalyst for olefin polymerization is a catalyst for olefin polymerization prepared by continuously feeding a part our all of the respective catalyst component in a device for preparing a catalyst, or a catalyst for olefin polymerization prepared by continuously feeding the respective catalyst components in a device for olefin polymerization, and
wherein the aliphatic hydrocarbon compound in (C) is an aliphatic hydrocarbon compound having a viscosity of not less than 0.8 mPa·s (cP) at 20°C.

2. The method for producing an olefin polymer according to claim 1, wherein (A) is a transition metal compound dissolved in an aliphatic hydrocarbon compound.

3. The method for producing an olefin polymer according to claim 1, wherein the transition metal compound is a transition metal compounds containing a group having at least one cyclopentadiene type anionic skeleton.

4. The method for producing an olefin polymer according to claim 1, wherein (B) is triethylaluminum, triisobutylaluminum, methylaluminoxane or isobutylaluminoxane dissolved, suspended or slurried in an aliphatic hydrocarbon compounds.

5. The method for producing an olefin polymer according to claim 1, wherein (C) is N,N-dimethylaniliniumtetrakis(pentafluorophenyl)borate or triphenylmethyltetrakis(pentafluorophenyl)borate suspended or slurried in an aliphatic hydrocarbon compound.

6. The method for producing an olefin polymer according to any one of claims 1 to 5, wherein the aliphatic hydrocarbon compounds in (C) and (A) are aliphatic hydrocarbon compounds having a viscosity of 1.6 to 50 mPa·s (cP) at 20°C.

7. The method for producing an olefin polymer according to any one of claims 1 to 5, wherein a maximum particle diameter of the boron compound in (C) is not more than 50 µm.

8. The method for producing an olefin polymer according to any one of claims to 7, wherein (C) is fed in the device for polymerization through a pipeline having a diameter of 0.5 to 100 mm.

9. The method for producing an olefin polymer according to any one of claims 1 to 5, wherein the olefin polymer is a copolymer comprising ethylene and α-olefin.

## Patentansprüche

1. Verfahren zur Herstellung eines Olefin-Polymers, **gekennzeichnet durch** Homopolymerisation eines Olefins oder Copolymerisation von zwei oder mehr Olefinen in Gegenwart eines Katalysators für die Olefin-Polymerisation, umfassend die folgenden
(A) und (C) als Katalysatorkomponenten, oder eines Katalysators für die Olefin-Polymerisation, umfassend die folgenden (A), (B) und (C) als Katalysatorkomponenten:
(A) eine Übergangsmetallverbindung, gelöst, suspendiert oder aufgeschlämmt in einer aliphatischen Kohlenwasserstoffverbindung;
(B) eine Verbindung, gelöst, suspendiert oder aufgeschlämmt in einer aliphatischen Kohlenwasserstoffverbindung, ausgewählt aus den folgenden (B1) bis (B3):
(B1) einer Organoaluminiumverbindung der allgemeinen Formel E¹ₐAlZ₃₋ₐ;
(B2) einem cyclischen Aluminoxan mit einer Struktur der allgemeinen Formel {-Al(E²)-O-}_{b}; und
(B3) einem linearen Aluminoxan mit einer Struktur der allgemeinen Formel E³{-Al(E³)-O-}_{c}AlE³₂,
wobei E¹ bis E³ jeweils einen Kohlenwasserstoffrest mit 1 bis 8 Kohlenstoffatomen darstellen und alle E¹, E² und E³ gleich oder verschieden sein können; Z ein Wasserstoffatom oder ein Halogenatom darstellt, und alle Z gleich oder verschieden sein können; a eine Zahl darstellt, die 0 < a ≤ 3 erfüllt; b eine ganze Zahl von nicht weniger als 2 darstellt; und c eine ganze Zahl von nicht weniger als 1 darstellt, und
(C) mindestens eine Borverbindung, suspendiert oder aufgeschlämmt in einer aliphatischen Kohlenwasserstoffverbindung, ausgewählt aus den folgenden (C1) bis (C3):
(C1) einer Borverbindung der allgemeinen Formel BQ¹Q²Q³;
(C2) einer Borverbindung der allgemeinen Formel G⁺(BQ¹Q²Q³Q⁴)⁻; und
(C3) einer Borverbindung der allgemeinen Formel (L-H)⁺(BQ¹Q²Q³Q⁴)⁻,
wobei B ein Boratom im dreiwertigen Valenzzustand bedeutet; Q¹ bis Q⁴ gleich oder verschieden sein können und ein Halogenatom, einen Kohlenwasserstoffrest mit 1 bis 20 Kohlenstoffatomen, einen halogenierten Kohlenwasserstoffrest mit 1 bis 20 Kohlenstoffatomen, einen substituierten Silylrest mit 1 bis 20 Kohlenstoffatomen, einen Alkoxyrest mit 1 bis 20 Kohlenstoffatomen oder einen Aminorest mit 2 bis 20 Kohlenstoffatomen bedeuten; G⁺ ein anorganisches oder organisches Kation bedeutet; L eine neutrale Lewis-Base darstellt; und (L-H)⁺ eine Brönsted-Säure bedeutet,
wobei der Katalysator für die Olefin-Polymerisation ein Katalysator für die Olefin-Polymerisation ist, der **durch** kontinuierliches Zuführen eines Teils oder der gesamten jeweiligen Katalysatorkomponenten zu einer Vorrichtung zur Herstellung eines Katalysators hergestellt wird, oder ein Katalysator für die Olefin-Polymerisation ist, der durch kontinuierliches Zuführen der jeweiligen Katalysatorkomponenten zu einer Vorrichtung zur Olefin-Polymerisation hergestellt wird, und
wobei die aliphatische Kohlenwasserstoffverbindung in (C) eine aliphatische Kohlenwasserstoffverbindung mit einer Viskosität von nicht weniger als 0,8 mPa·s (cP) bei 20°C ist.

2. Verfahren zur Herstellung eines Olefin-Polymers nach Anspruch 1, wobei (A) eine Übergangsmetallverbindung, gelöst in einer aliphatischen Kohlenwasserstoffverbindung, ist.

3. Verfahren zur Herstellung eines Olefin-Polymers nach Anspruch 1, wobei die Übergangsmetallverbindung eine Übergangsmetallverbindung ist, die einen Rest mit mindestens einem anionischen Gerüst vom Cyclopentadien-Typ enthält.

4. Verfahren zur Herstellung eines Olefin-Polymers nach Anspruch 1, wobei (B) Triethylaluminium, Triisobutylaluminium, Methylaluminoxan oder Isobutylaluminoxan, gelöst, suspendiert oder aufgeschlämmt in einer aliphatischen Kohlenwasserstoffverbindung, ist.

5. Verfahren zur Herstellung eines Olefin-Polymers nach Anspruch 1, wobei (C) N,N-Dimethylaniliniumtetrakis(pentafluorphenyl)borat oder Triphenylmethyltetrakis-(pentafluorphenyl)borat, suspendiert oder aufgeschlämmt in einer aliphatischen Kohlenwasserstoffverbindung, ist.

6. Verfahren zur Herstellung eines Olefin-Polymers nach einem der Ansprüche 1 bis 5, wobei die aliphatischen Kohlenwasserstoffverbindungen in (C) und (A) aliphatische Kohlenwasserstoffverbindungen mit einer Viskosität von 1,6 bis 50 mPa·s (cP) bei 20°C sind.

7. Verfahren zur Herstellung eines Olefin-Polymers nach einem der Ansprüche 1 bis 5, wobei ein maximaler Teilchendurchmesser der Borverbindung in (C) nicht mehr als 50 *µ*m beträgt.

8. Verfahren zur Herstellung eines Olefin-Polymers nach einem der Ansprüche 1 bis 7, wobei (C) der Vorrichtung zur Polymerisation über eine Rohrleitung mit einem Durchmesser von 0,5 bis 100 mm zugeführt wird.

9. Verfahren zur Herstellung eines Olefin-Polymers nach einem der Ansprüche 1 bis 5, wobei das Olefin-Polymer ein Copolymer ist, das Ethylen und α-Olefin umfasst.

## Revendications

1. Procédé de production d'un polymère d'oléfine **caractérisé par** l'homopolymérisation d'une oléfine ou la copolymérisation de deux oléfines ou plus en présence d'un catalyseur pour la polymérisation des oléfines, comprenant (A) et (C) suivants comme composants de catalyseur, ou un catalyseur pour la polymérisation des oléfines, comprenant (A), (B) et (C) suivants comme composants de catalyseur :
(A) composé de métal de transition dissous, mis en suspension ou sous forme de barbotine dans un composé hydrocarboné aliphatique ;
(B) composé dissous, mis en suspension ou sous forme de barbotine dans un composé hydrocarboné aliphatique, qui est choisi parmi (B1) à (B3) suivants :
(B1) un composé organoaluminium représenté par la formule générale E¹ₐAlZ₃₋ₐ;
(B2) un aluminoxane cyclique ayant une structure représentée par la formule générale {-Al(E²)-O-}_{b} ; et
(B3) un aluminoxane linéaire ayant une structure représentée par la formule générale E³{-Al(E³)-O-}_{c}AlE³₂
dans lesquels E¹ à E³ représentent respectivement un groupe hydrocarboné ayant de 1 à 8 atomes de carbone, et tous les E¹, E² et E³ peuvent être identiques ou différents ; Z représente un atome d'hydrogène ou un atome d'halogène, et tous les Z peuvent être identiques ou différents ; a représente un nombre satisfaisant à 0 < a ≤ 3 ; b représente un entier non inférieur à 2 ; et c représente un entier non inférieur à 1, et
(C) au moins un composé du bore mis en suspension ou sous forme de barbotine dans un composé hydrocarboné aliphatique, qui est choisi parmi (C1) à (C3) suivants:
(C1) un composé du bore représenté par la formule générale BQ¹Q²Q³;
(C2) un composé du bore représenté par la formule générale G⁺(BQ¹Q²Q³Q⁴)⁻; et
(C3) un composé du bore représenté par la formule générale (L-H)⁺(BQ¹Q²Q³Q⁴)⁻
dans lesquels B représente un atome de bore dans l'état de valence trivalent ; Q¹ à Q⁴ peuvent être identiques ou différents et représentent un atome d'halogène, un groupe hydrocarboné ayant de 1 à 20 atomes de carbone, un groupe hydrocarboné halogéné ayant de 1 à 20 atomes de carbone, un groupe silyle substitué ayant de 1 à 20 atomes de carbone, un groupe alcoxy ayant de 1 à 20 atomes de carbone ou un groupe amino ayant de 2 à 20 atomes de carbone ; G⁺ représente un cation organique ou inorganique ; L représente une base de Lewis neutre ; et (L-H)⁺ représente un acide de Brönsted,
dans lequel le catalyseur pour la polymérisation d'oléfines est un catalyseur pour la polymérisation d'oléfines préparé en chargeant en continu une partie ou l'ensemble des composants respectifs du catalyseur dans un dispositif de préparation de catalyseur, ou un catalyseur pour la polymérisation d'oléfines préparé en chargeant en continu les composants respectifs du catalyseur dans un dispositif de polymérisation des oléfines, et
dans lequel le composé hydrocarboné aliphatique en (C) est un composé hydrocarboné aliphatique ayant une viscosité non inférieure à 0,8 mPa.s (cP) à 20 °C.

2. Procédé de production d'un polymère d'oléfine selon la revendication 1, dans lequel (A) est un composé de métal de transition dissous dans un composé hydrocarboné aliphatique.

3. Procédé de production d'un polymère d'oléfine selon la revendication 1, dans lequel le composé de métal de transition est un composé de métal de transition contenant un groupe ayant au moins un squelette anionique de type cyclopentadiène.

4. Procédé de production d'un polymère d'oléfine selon la revendication 1, dans lequel (B) est le triéthylaluminium, triisobutylaluminium, méthylaluminoxane ou isobutylaluminoxane dissous, mis en suspension ou sous forme de barbotine dans un composé hydrocarboné aliphatique.

5. Procédé de production d'un polymère d'oléfine selon la revendication 1, dans lequel (C) est le N,N-diméthylaniliniumtétrakis(pentafluorophényl)borate ou triphénylméthyltétrakis(pentafluorophényl)borate mis en suspension ou sous forme de barbotine dans un composé hydrocarboné aliphatique.

6. Procédé de production d'un polymère d'oléfine selon l'une quelconque des revendications 1 à 5, dans lequel les composés hydrocarbonés aliphatiques en (C) et (A) sont des composés hydrocarbonés aliphatiques ayant une viscosité de 1,6 à 50 mPa·s (cP) à 20°C.

7. Procédé de production d'un polymère d'oléfine selon l'une quelconque des revendications 1 à 5, dans lequel un diamètre maximum des particules du composé de bore en (C) n'est pas supérieur à 50 µm.

8. Procédé de production d'un polymère d'oléfine selon l'une quelconque des revendications 1 à 7 dans lequel, (C) est chargé dans le dispositif de polymérisation à travers une canalisation ayant un diamètre de 0,5 à 100 mm.

9. Procédé de production d'un polymère d'oléfine selon l'une quelconque des revendications 1 à 5, dans lequel le polymère d'oléfine est un copolymère comprenant de l'éthylène et de l'α-oléfine.
